Europäisches Patentamt

European Patent Office

Office européen des brevets

(11) Veröffentlichungsnummer: **0 369 304 B1**

(19)

(12) **EUROPÄISCHE PATENTSCHRIFT**

(45) Veröffentlichungstag der Patentschrift: **02.03.94**

(21) Anmeldenummer: **89120649.2**

(22) Anmeldetag: **08.11.89**

(51) Int. Cl.⁵: **F24F 13/06**

(54) **Düsenauslass.**

(30) Priorität: **12.11.88 DE 3838419**

(43) Veröffentlichungstag der Anmeldung:
**23.05.90 Patentblatt 90/21**

(45) Bekanntmachung des Hinweises auf die
Patenterteilung:
**02.03.94 Patentblatt 94/09**

(84) Benannte Vertragsstaaten:
**AT BE CH DE ES FR GB GR IT LI LU NL SE**

(56) Entgegenhaltungen:
**EP-A- 0 149 203**
**DE-A- 3 418 678**
**FR-A- 1 547 563**

(73) Patentinhaber: **Schako Metallwarenfabrik Ferdinand Schad KG**
**Zweigniederlassung Kolbingen**
**Steigstrasse 30**
**D-78600 Kolbingen(DE)**

(72) Erfinder: **Müller, Gottfried**
**Haldenstrasse 12**
**D-7201 Kolbingen(DE)**
Erfinder: **Hipp, Paul**
**Hauptstrasse 35**
**D-7201 Kolbingen(DE)**

(74) Vertreter: **Weiss, Peter, Dr. rer.nat.**
**Dr. Peter Weiss & Partner**
**Postfach 12 50**
**D-78229 Engen (DE)**

EP 0 369 304 B1

**Beschreibung**

Die Erfindung betrifft einen Düsenauslaß zum Einbringen von Warm- und/oder Kaltluft in einen Raum über eine Mehrzahl von Einzeldüsen in einem Auslaßgehäuse, wobei jeweils zwei Einzeldüsen sich gegenüberliegend beidseits einer Gehäusemittelachse angeordnet sind.

Derartige Düsenauslässe sind in vielfältiger Form bekannt. In den meisten Fällen beendigen sie die Führung einer Warm- bzw. Kaltlufteinbringung durch eine Klimaanlage od. dgl.. Diese Auslässe sind im wesentlichen entsprechenden bestimmten Anforderungen des Raumes angepaßt. Es kann sich dabei um einen Schlitzauslaß, Gitterauslaß oder auch Einzeldüsenauslaß handeln. Solche Einzeldüsen sind beispielsweise aus Reisebussen oder Flugzeugen bekannt. Dort können kugelige Einzeldüsen so verstellt werden, daß sie auf einen bestimmten Sitz gerichtet sind (siehe auch EP-A 0 149 203).

Eine Anordnung von Düsen der o.g. Art ist ferner auch aus der FR-A 1 547 563 zu entnehmen. Dort sind entweder Einzeldüsen oder aber auch Düsen in Stangen links und rechts einer Gehäusemittelachse vorgesehen, wobei diese Düsen eine bestimmte Neigung zueinander einnehmen können. Bei den Einzeldüsen ist allerdings die einmal eingestellte Neigung durch die Gehäuseausgestaltung nicht veränderbar, bei den Düsen in drehbaren Stangen kann eine laufende und auch unerwünschte Verstellung einer ganzen Düsenreihe erfolgen.

Der vorliegenden Erfindung liegt die Aufgabe zugrunde, einen Auslaß der o.g. Art so zu verbessern, daß eine gute Einmischung von Zuluft in vorhandene Raumluft und ein relativ schneller Temperaturab- bzw. -aufbau erfolgen kann, wobei bei der Anbringung des Auslasses Anforderungen an eine gewünschte Richtung des Luftaustrittes Rechnung getragen werden kann, die einmal eingestellte Richtung dann aber nicht mehr veränderbar sein soll.

Zur Lösung dieser Aufgabe führt, daß die Einzeldüsen einerseits über Befestigungswinkel mit dem Auslaßgehäuse und andererseits über eine entlang der Gehäusemittelachse verlaufende Befestigungsschiene miteinander verbunden sind.

Bevorzugt sollen dies eine ganze Anzahl von relativ kleinen Einzeldüsen sein. Hierdurch entstehen zwischen den Einzeldüsen viele Einzelinduktionszonen, wodurch eine sehr gute Einmischung der Zuluft in die Raumluft ermöglicht wird. Dies bewirkt dann wiederum den beschleunigten Temperaturab- bzw. -aufbau.

Ferner werden durch die vielen Einzeldüsen gezielte Weitwurfstrahlen erreicht, so daß die eingebrachte Luft in große Weiten des Aufenthaltsraumes schnell eingebracht wird.

Für das Einbringen von Kaltluft ist vorgesehen, daß bei entsprechendem Wunsch die Zuluftmenge durch einen polumschaltbaren Motor verringert wird, so daß, falls wünschenswert, wesentlich weniger Luft über denselben Auslaß einströmen kann.

Bevorzugt sind mehrere Einzeldüsen an Düsenschienen vorgesehen. Dabei können die Düsenachsen der Einzeldüsen einer jeden Düsenschiene eine gleiche Neigung besitzen.

Einzeldüsen oder Düsenschienen sind über Befestigungswinkel mit dem Auslaßgehäuse verbunden. Dabei besteht jeder Befestigungswinkel aus einem Tragschenkel und einem Befestigungsschenkel. Letzterer greift in einen Aufnahmeschlitz der Einzeldüse bzw. Düsenschiene ein. Hierdurch ist die Einzeldüse bzw. Düsenschiene mit dem Befestigungswinkel verbunden. Zur Bestimmung der Neigung der Düsenachse weisen Tragschenkel und Befestigungsschenkel einen vorbestimmten Winkel auf. Ist beispielsweise dieser Winkel 90°, so verläuft die Düsenachse achsparallel zur Mittelachse des Auslaßgehäuses. Jedoch sind je nach gewünschter Neigung die entsprechenden Winkel zwischen Tragschenkel und Befestigungsschenkel einstellbar. Dies geschieht durch einfaches Abkanten des Befestigungswinkels.

Diese Befestigungswinkel haben auch den Vorteil, daß Einzeldüsen oder Düsenschienen in laufende Rahmen eines Düsenauslasses eingesetzt werden können, wobei die Länge dieses Rahmens auch die aufzunehmende Anzahl von Einzeldüsen bestimmt.

Die Einzeldüsen oder Düsenschienen untereinander stehen über eine Befestigungsschiene miteinander in Verbindung. Diese Befestigungsschiene besteht der Einfachheit halber wiederum aus zwei Schienenschenkeln, welche in entsprechende Aufnahmeschlitze in der Einzeldüse bzw. Düsenschiene eingreifen.

Um hier einer geforderten Neigung der Düsenachsen zueinander Rechnung tragen zu können, besitzt die Befestigungsschiene eine Mittelprägung, über welche die Schienenschenkel eine Winkelstellung zur Mittelachse erhalten, welche dem Winkel zwischen Tragschenkel und Befestigungsschenkel des Befestigungswinkels entspricht.

Zusätzlich wird daran gedacht, daß die Einzeldüsen wiederum eine unterscheidliche Neigung zur Mittelachse aufweisen. Hierdurch wird jedem Wunsch Rechnung getragen, je nachdem an welcher Stelle des Raumes der Düsenauslaß vorgesehen ist und je nachdem welchen Anforderungen die Einzeldüsen gerecht werden sollen.

Ein derartiger Düsenauslaß kann für den Einbau in Rundrohre in eckige Kanäle bzw. für quadratische oder runde Deckenplatten, mit oder ohne Ballschutz, konzipiert sein. Er ist vielfältig einsetzbar, da die Einzeldüsen leicht und einfach einstellbar sind.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1     eine Unteransicht eines erfindungsgemäßen Düsenauslasses;

Fig. 2     einen vergrößert dargestellten Querschnitt durch den Düsenauslaß gemäß Fig. 1 entlang Linie A-A;

Fig. 3     einen vergrößert dargestellten Querschnitt durch den Düsenauslaß gemäß Fig. 1 entsprechend Fig. 2, jedoch mit unterschiedlichen Stellungen der Einzeldüsen;

Fig. 4     eine Unteransicht eines weiteren Ausführungsbeispiels eines Düsenauslasses;

Fig. 5     eine Unteransicht eines weiteren Ausführungsbeispiels eines Düsenauslasses.

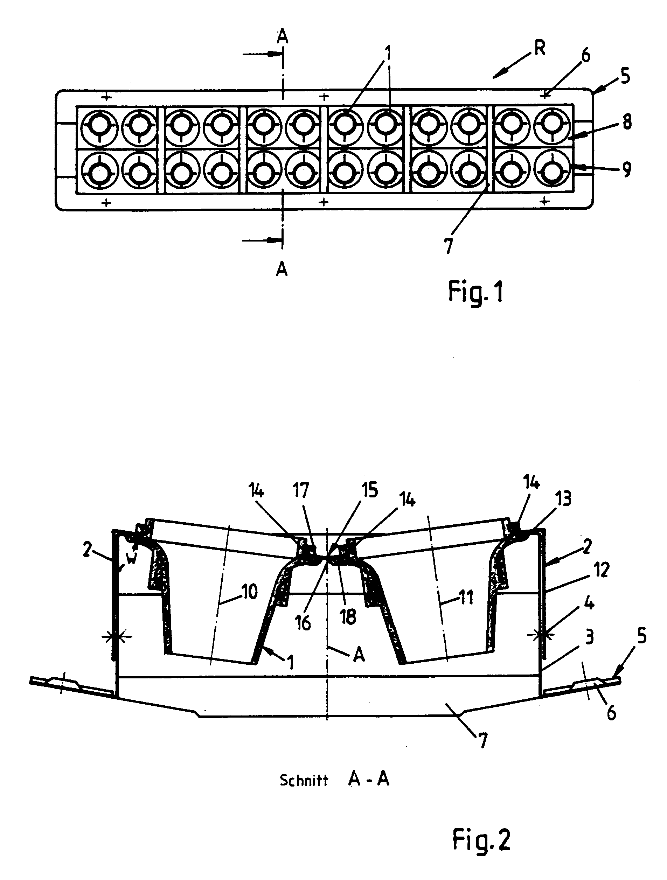

Ein Düsenauslaß R weist eine Vielzahl von Einzeldüsen 1 auf, welche nach dem Ausführungsbeispiel von Figur 1 in zwei Reihen angeordnet sind. Jede Einzeldüse 1 ist über einen Befestigungswinkel 2 (siehe Figur 2) mit einem Auslaßgehäuse 3 verbunden. Die notwendige Verbindung geschieht über ein beliebiges Befestigungsmittel, welches bei 4 angedeutet ist.

Das Auslaßgehäuse 3 besitzt einen Ringkragen 5, in welchen entsprechende Löcher 6 eingestanzt sind, die beispielsweise der Aufnahme von Senkkopfschrauben dienen. Über diese Schrauben wird der Düsenauslaß in einer Decke befestigt.

Ferner sind im Auslaßgehäuse 3 Querstege 7 vorgesehen, welche als Schutz für die Einzeldüsen 1 beispielsweise gegenüber Ballwurf dienen.

Gemäß Figur 1 sind in das Auslaßgehäuse 3 zwei Düsenschienen 8 und 9 eingesetzt, wobei die jeweiligen Einzeldüsen 1 dieser Düsenschienen 8 und 9 in unterschiedliche Richtungen zeigen. Dies bedeutet, daß die Düsenachsen 10 und 11 einen bestimmten Winkel einschließen, welcher der Übersichtlichkeit halber in Figur 2 nicht gezeigt ist, wobei jedoch jede Düsenachse 10 bzw. 11 in einem spitzen Winkel zur Mittelachse A des Düsenauslasses R verläuft.

Jeder Befestigungswinkel 2 besteht aus einem mit dem Auslaßgehäuse 3 über das Befestigungsmittel 4 verbundenen Tragschenkel 12 sowie einem der Einzeldüse 1 zugeordneten Befestigungsschenkel 13. Dieser Befestigungsschenkel 13 greift in einen Aufnahmeschlitz 14 der Einzeldüse 1 bzw. der Düsenschiene 8 oder 9 ein. Über den Winkel w, den der Befestigungsschenkel 13 und der Tragschenkel 12 miteinander einschließen, wird die Neigung der Düsenachse 10 bzw. 11 gegenüber der Mittelachse A bestimmt.

Auch zwischen den Einzeldüsen 1 bzw. der Düsenschiene 8 und 9 befindet sich eine Befestigungsschiene 15, welche im Ausführungsbeispiel nach Figur 2 eine Mittelprägung 16 besitzt, wodurch wiederum zwei Schienenschenkel 17 und 18 ausgebildet werden, die in gleichartige Aufnahmeschlitze 14 jeder Einzeldüse 1 eingreifen. Der Winkel der Mittelprägung 16 ist so ausgebildet, daß jeder Schienenschenkel 17 bzw. 18 einen dem Winkel w entsprechenden Winkel mit der Mittelachse A einschließt.

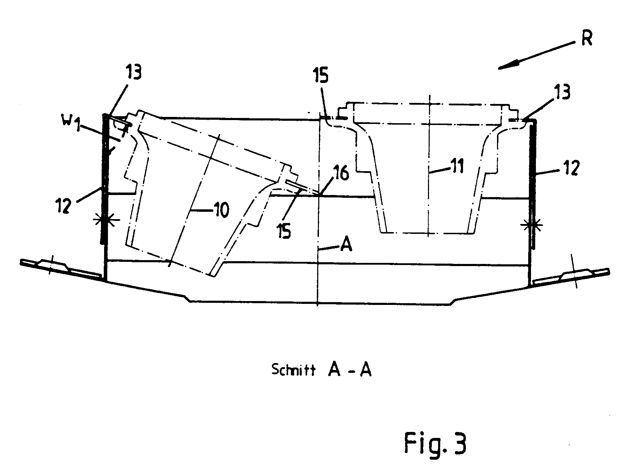

In Figur 3 ist ein Ausführungsbeispiel des Düsenauslasses R gezeigt, bei dem die Düsenachsen 10 bzw. 11 unterschiedliche Winkel zur Mittelachse A einschließen. In der rechten Hälfte verläuft die Düsenachse 11 achsparallel zur Mittelachse A. Aus diesem Grund schließen Befestigungsschenkel 13 und Tragschenkel 12 auch einen Winkel von 90° miteinander ein. In diesem Fall besitzt die Befestigungsschiene 15 keine Mittelprägung, so daß die Schienenschenkel 17 und 18 in einer Ebene verlaufen.

Demgegenüber verläuft die Düsenachse 10 des Ausführungsbeispiels auf der linken Hälfte von Figur 3 wesentlich geneigter zur Mittelachse A. Entsprechend geneigt muß auch der Winkel $w_1$ zwischen Befestigungsschenkel 13 und Tragschenkel 12 ausgebildet sein. In gleichem Umfang besitzt die Befestigungsschiene 15 eine entsprechende Mittelprägung 16.

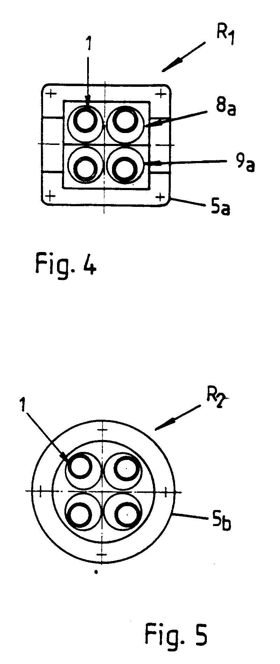

Entsprechende Düsenschienen 8a bzw. 9a sind auch in dem Düsenauslaß $R_1$ entsprechend Figur 4 gezeigt. Dort sind allerdings je Düsenschiene 8a bzw. 9a nur zwei Einzeldüsen 1 vorgesehen. Diese Düsenschienen 8a bzw. 9a sind von einem etwa quadratischen Ringkragen 5a umgeben, so daß durch diesen Düsenauslaß $R_1$ beispielsweise eine quadratische Deckenplatte ersetzt werden kann.

Ähnlich wie bei Figur 4 lassen sich die entsprechenden Einzeldüsen 1 auch bei einem runden Düsenauslaß $R_2$ verwenden. In diesem Fall ist der Ringkragen 5b rund ausgebildet. Die nicht gezeigten Befestigungswinkel müssen dann entsprechend abgekantet sein, wobei es sich hier als notwendig erweisen wird, die ebenfalls nicht gezeigten Befestigungsschienen entsprechend einer gewünschten Neigung der Düsenachsen auszubilden.

| | P O S I T I O N S Z A H L E N L I S T E | | | | | |
|---|---|---|---|---|---|---|
| 1 | Einzeldüse | 34 | | | | |
| 2 | Befestigungswinkel | 35 | | | | |
| 3 | Auslaßgehäuse | 36 | | | | |
| 4 | Befestigungsmittel | 37 | | | | |
| 5 | Ringkragen | 38 | | | | |
| 6 | Loch | 39 | | | | |
| 7 | Quersteg | 40 | | | | |
| 8 | Düsenschiene | 41 | | | | |
| 9 | Düsenschiene | 42 | | | | |
| 10 | Düsenachse | 43 | | | | |
| 11 | Düsenachse | 44 | | | | |
| 12 | Tragschenkel | 45 | | | | |
| 13 | Befestigungsschenkel | 46 | | | | |
| 14 | Aufnahmeschlitz | 47 | | | | |
| 15 | Befestigungsschiene | 48 | | | | |
| 16 | Mittelprägung | 49 | | | | |
| 17 | Schienenschenkel | 50 | | | | |
| 18 | Schienenschenkel | 51 | | | | |
| 19 | | 52 | | | | |
| 20 | | 53 | | | | |
| 21 | | 54 | | | | |
| 22 | | 55 | | | | |
| 23 | | 56 | | | | |
| 24 | | 57 | | | | |
| 25 | | 58 | | | R | Düsenauslaß |
| 26 | | 59 | | | | |
| 27 | | 60 | | | | |
| 28 | | 61 | | | | |
| 29 | | 62 | | | | |
| 30 | | 63 | | | w | Winkel |
| 31 | | 64 | | | | |
| 32 | | 65 | | | | |
| 33 | | 66 | | | | |

**Patentansprüche**

1. Düsenauslaß zum Einbringen von Warm- und/oder Kaltluft in einen Raum über eine Mehrzahl von Einzeldüsen (1) in einem Auslaßgehäuse (3), wobei jeweils zwei Einzeldüsen (1) sich gegenüberliegend beidseits einer Gehäusemittelachse (A) angeordnet sind,
dadurch gekennzeichnet,
daß die Einzeldüsen (1) einerseits über Befestigungswinkel (2) mit dem Auslaßgehäuse (3) und

4

EP 0 369 304 B1

andererseits über eine entlang der Gehäusemittelachse (A) verlaufende Befestigungsschiene (15) miteinander verbunden sind.

2. Düsenauslaß nach Anspruch 1, dadurch gekennzeichnet, daß jeder Befestigungswinkel (2) aus einem Tragschenkel (12) und einem Befestigungsschenkel (13) besteht, wobei letzterer in einen Aufnahmeschlitz (14) der Einzeldüse (1) oder Düsenschiene (8,9) eingreift.

3. Düsenauslaß nach Anspruch 2, dadurch gekennzeichnet, daß Tragschenkel (12) und Befestigungsschenkel (13) einen Winkel (w) zur Bestimmung der Neigung der Düsenachse (10 oder 11) einschließen.

4. Düsenauslaß nach einem der Ansprüche 1 bis 3, dadurch gekennzeichnet, daß die Befestigungsschiene (15) zwei Schienenschenkel (17,18) besitzt, welche in Aufnahmeschlitze (14) der Einzeldüse (1) bzw. Düsenschiene (8,9) eingreifen.

5. Düsenauslaß nach Anspruch 4, dadurch gekennzeichnet, daß die Befestigungsschiene (15) eine Mittelprägung (16) besitzt, über welche die Schienenschenkel (17, 18) in einem dem Winkel (w) von Befestigungsschenkel (13) zu Tragschenkel (12) entsprechenden Winkel zur Mittelachse (A) geneigt sind.

6. Düsenauslaß nach wenigstens einem der Ansprüche 1 bis 5, dadurch gekennzeichnet, daß die Düsenachsen (10,11) der Einzeldüsen (1) zueinander bzw. zu einer Mittelachse (A) des Auslaßgehäuses (3) geneigt verlaufen.

7. Düsenauslaß nach wenigstens einem der Ansprüche 1 bis 6, dadurch gekennzeichnet, daß die Düsenachsen (10,11) der Einzeldüsen (1) eine unterschiedliche Neigung zur Mittelachse (A) aufweisen.

8. Düsenauslaß nach wenigstens einem der Ansprüche 1 bis 7, dadurch gekennzeichnet, daß mehrere Einzeldüsen (1) an Düsenschienen (8,9) vorgesehen sind, wobei die Düsenachsen (10,11) der Einzeldüsen (1) einer jeden Düsenschiene (8,9) eine gleiche Neigung besitzen.

**Claims**

1. Nozzle vent for the introduction of hot and/or cold air into a room via a plurality of individual nozzles (1) in a vent casing (3), wherein two individual nozzles (1) are arranged opposite one another on both sides of a casing central axis (A) in each case, characterised in that the individual nozzles are connected on the one hand via fastening angles (2) to the vent casing (3) and on the other hand via a fastening rail (15) extending along the casing central axis (A) to one another.

2. Nozzle vent according to claim 1, characterised in that each fastening angle (2) consists of a carrying arm (12) and a fastening arm (13), the fastening arm engaging in a receiving slot (14) of the individual nozzle (1) or nozzle rail (8, 9).

3. Nozzle vent according to claim 2, characterised in that carrying arms (12) and fastening arms (13) enclose an angle (w) for determining the inclination of the nozzle axis (10 or 11).

4. Nozzle vent according to one of claims 1 to 3, characterised in that the fastening rail (15) has two rail arms (17, 18) which engage in receiving slots (14) in the individual nozzle (1) or nozzle rail (8, 9).

5. Nozzle vent according to claim 4, characterised in that the fastening rail (15) has a central mark (16) by means of which the rail arms (17, 18) are inclined to the central axis (A) at an angle corresponding to the angle (w) of the fastening arm (13) to carrying arm (12).

6. Nozzle vent according to at least one of claims 1 to 5, characterised in that the nozzle axes (10, 11) of the individual nozzles (1) extend at an inclination to one another or to a central axis (A) of the vent casing (3).

5

7. Nozzle vent according to at least one of claims 1 to 6, characterised in that the nozzle axes (10, 11) of the individual nozzles (1) have a different inclination to the central axis (A).

8. Nozzle vent according to at least one of claims 1 to 7, characterised in that several individual nozzles (1) are provided on nozzle rails (8, 9), the nozzle axes (10, 11) of the individual nozzles (1) of each nozzle rail (8, 9) having an identical inclination.

**Revendications**

1. Dispositif de sortie à buses pour introduire de l'air chaud et/ou de l'air froid dans un volume, par plusieurs buses indépendantes (1) placées dans un boîtier de sortie (3), deux buses indépendantes (1) se trouvant chaque fois en regard l'une de l'autre de part et d'autre de l'axe médian (A) du boîtier, caractérisé en ce que les buses indépendantes (1) sont reliées l'une à l'autre, d'une part, par l'intermédiaire d'une cornière de fixation (2) au boîtier de sortie (3) et, d'autre part, par un rail de fixation (15) dirigé suivant l'axe médian (A) du boîtier.

2. Dispositif de sortie à buses selon la revendication 1, caractérisé en ce que chaque cornière de fixation (2) se compose d'une branche de support (12) et d'une branche de fixation (13), cette dernière pénétrant dans une fente de réception (14) de la buse indépendante (1) ou des rails de buses (8, 9).

3. Dispositif de sortie à buses selon la revendication 2, caractérisé en ce que la branche de support (12) et la branche de fixation (13) forment un angle (w) pour définir l'inclinaison de l'axe de buse (10 ou 11).

4. Dispositif de sortie à buses selon l'une des revendications 1 à 3, caractérisé en ce que le rail de fixation (15) comporte deux branches de rail (17, 18) pénétrant dans des fentes de réception (14) des buses indépendantes (1) ou des rails de buses (8, 9).

5. Dispositif de sortie à buses selon la revendication 4, caractérisé en ce que le rail de fixation (15) comporte un estampage central (16) par lequel les branches (17, 18) du rail sont inclinées par rapport à l'axe (A) suivant un angle correspondant à l'angle (w) entre la branche de fixation (13) et la branche de support (12).

6. Dispositif de sortie à buses selon au moins l'une des revendications 1 à 5, caractérisé en ce que les axes (10, 11) des buses indépendantes (1) sont inclinés l'un par rapport à l'autre ou par rapport à un axe central (A) du boîtier de sortie (3).

7. Dispositif de sortie à buses selon au moins l'une des revendications 1 à 6, caractérisé en ce que les axes (10, 11) des buses indépendantes (1) ont des inclinaisons différentes par rapport à l'axe médian (A).

8. Dispositif de sortie à buses selon au moins l'une des revendications 1 à 7, caractérisé par plusieurs buses indépendantes (1) prévues sur des rails de buses (8, 9), les axes (10, 11) des buses indépendantes (1) ayant la même inclinaison par rapport à chaque rail de buses (8, 9).

Fig.1

Schnitt A - A

Fig.2

Schnitt A - A

Fig. 3

Fig. 4

Fig. 5